# EUROPÄISCHE PATENTSCHRIFT

(11) **EP 0 525 837 B1**
(45) Veröffentlichungstag und Bekanntmachung des Hinweises auf die Patenterteilung: **04.01.1995**
(21) Anmeldenummer: 92118210.1
(22) Anmeldetag: 05.04.1990
(51) Int. Cl.: B60R 22/18

(54) **Vorrichtung zum Straffen eines Sicherheitsgurtes in einem Fahrzeug, insbesondere Kraftfahrzeug**
Device for tensioning a safety belt in a vehicle, in particular in a motor vehicle
Dispositif pour tendre une ceinture de sécurité dans un véhicule, en particulier véhicule automobile

(30) Priorität: 13.05.1989 DE 3915723; 26.09.1989 DE 3932090; 03.10.1989 DE 3933009; 05.10.1989 DE 3933276
(43) Veröffentlichungstag der Anmeldung: 03.02.1993
(62) Teilanmeldung aus: 90106535.9
(73) Patentinhaber: HS TECHNIK + DESIGN TECHNISCHE ENTWICKLUNGEN GMBH, 80639 München (DE)
(72) Erfinder: Specht, Martin, W-8133 Feldafing (DE); Meyer, Rudolf, W-8063 Odelzhausen (DE)
(74) Vertreter: Nöth, Heinz, Dipl.-Phys.

(56) Entgegenhaltungen:
- EP-A- 0 300 469
- EP-A- 0 306 299
- DE-U- 8 813 979

## Beschreibung

Die Erfindung betrifft eine Vorrichtung zum Straffen eines Sicherheitsgurtes in einem Fahrzeug, insbesondere Kraftfahrzeug, mit einem Sensor, der auf eine extreme Fahrzeuggeschwindigkeitsänderung anspricht, einer in einem Gehäuse angeordneten Druckfeder, die durch eine Verriegelung einen im gespannten Zustand gehaltenen Kraftspeicher für eine eine Gurtlose beseitigende Rückstrammbewegung bildet, einem mit dem Sicherheitsgurt verbundenen Zugseil, auf welches im entriegelten Zustand des Kraftspeichers die Rückstrammbewegung übertragen wird, und einer Rücklaufsperre, die in einer zur Rückstrammbewegung entgegengesetzten Bewegungsrichtung des Zugseils sperrend wirkt. Eine solche Vorrichtung ist beispielsweise aus der EP-A-300 469 bekannt.

Aufgabe der Erfindung ist es, eine derartige Vorrichtung zum Straffen eines Sicherheitsgurtes in einem Fahrzeug, insbesondere Kraftfahrzeug, zu schaffen, bei der ein unbeabsichtigtes Auslösen des Sensors, insbesondere beim Verstellen des Fahrzeugsitzes, unterbunden ist.

Diese Aufgabe wird erfindungsgemäß dadurch gelöst, daß der Sensor und die den Kraftspeicher bildende Druckfeder in einem am Fahrzeug ortsfest befestigten ersten Gehäuse angeordnet sind, und die Rücklaufsperre in einem zweiten, mit einem Fahrzeugsitz mitverstellbaren Gehäuse vorgesehen ist und daß ein Bowdenzug vorgesehen ist, der die von der entriegelten Druckfeder erzeugte Rückstrammbewegung von der Druckfeder auf die mit dem Zugseil verbundene Rücklaufsperre überträgt.

Hierdurch ist gewährleistet, daß auf den Sensor bei der Verstellung des Fahrzeugsitzes in Fahrzeuglängsrichtung oder auch bei der Höhenverstellung kein Impuls ausgeübt wird, welcher zum unbeabsichtigten Auslösen des Sensors führen kann. Hierzu sind der Sensor und die den Kraftspeicher bildende Druckfeder ortsfest am Fahrrzeug in einem ersten Gehäuse gelagert. Die Rücklaufsperre für das Zugseil ist hiervon getrennt und mit dem Fahrzeugsitz verstellbar in einem zweiten Gehäuse angeordnet. Hierzu können die beiden Gehäuse hintereinanderliegend so angeordnet sein, daß das den Sensor und die Druckfeder enthaltende Gehäuse an einem beispielsweise mit dem Fahrzeugboden verbundenen ortsfesten Teil, insbesondere der unteren Ankerschiene des Fahrzeugsitzes, fest verbunden ist und das zweite Gehäuse, welches die Rücklaufsperre aufnimmt, mit der mit dem Fahrzeugsitz verstellbaren oberen Ankerschiene verbunden sind. In dem einen Gehäuse wirkt der Sensor und dann bei der Entriegelung der Druckfeder deren Rückstellbewegung auf das Zugseil und in dem anderen Gehäuse nach der Rückstrammbewegung die Rücklaufsperre auf das Zugseil.

Es ist jedoch auch möglich, die beiden bevorzugt rohrförmig ausgebildeten Gehäuse mit ihren Achsen nicht miteinander fluchtend anzuordnen, da die Rückstrammbewegung, welche von der entriegelten Druckfeder ausgelöst wird, über einen Bowdenzug auf das Zugseil übertragen wird.

Hierzu kann die Bowdenzughülle am ersten Gehäuse in Richtung der von der Druckfeder vermittelten Rückstrammbewegung beweglich geführt sein, wobei das eine Ende des Bowdenzugdrahtes mit dem ersten Gehäuse fest verbunden ist, und das zweite Ende des Bowdenzugdrahtes mit dem Zugseil verbunden ist. Hierbei überträgt sich die Bewegung der Bowdenzughülle gegenüber dem ersten Gehäuse bei der Rückstrammbewegung der Druckfeder auf das mit dem Zugseil verbundene Ende des Bowdenzugdrahtes, wodurch die gewünschte Rückstrammbewegung für den Sicherheitsgurt erreicht wird.

Eine weitere Ausführungsform besteht darin, daß die Rückstrammbewegung der entriegelten Druckfeder auf das eine Ende des Bowdenzugdrahtes übertragen wird und das andere Ende des Bowdenzugdrahtes mit dem Zugseil verbunden ist. Auch hier erreicht man dann die für den Sicherheitsgurt gewünschte Rückstrammbewegung.

Die als Kraftspeicher wirkende Druckfeder kann mit ihrem einen Ende an einem Riegelbolzen, der zur Verriegelung gehört, und mit ihrem anderen Ende an einem mit dem Bowdenzugdraht verbundenen Teil abgestützt sein.

Ferner kann eine Sensorfeder vorgesehen sein, die als Druckfeder ausgebildet ist und mit ihrem einen Ende am Riegelbolzen und mit ihrem anderen Ende an einem mit dem Bowdenzugdraht verbundenen Teil abgestützt ist. Hierdurch wird gewährleistet, daß der Riegelbolzen im ersten Gehäuse eine definierte Stellung beibehält, so daß insbesondere im Crashfall die beiden Sensorteile sich voneinander entfernen können, damit das Verriegelungselement durch die Kraft der Druckfeder aus seiner Verriegelungsstellung geschwenkt werden kann.

Die im zweiten Gehäuse vorgesehene Rücklaufsperre wirkt bevorzugt auf das Zugseil. Hierzu kann im zweiten Gehäuse das Zugseil mit dem Bowdenzugdraht über ein Seilverbindungsstück, das in dem zweiten Gehäuse axial geführt wird, verbunden sein. Die Rücklaufsperre kann als Rastellipse ausgebildet sein, die in Ruhestellung und Rückstrammbewegung in definierter Schräglage klemmfrei in dem als Bremsrohr ausgebildeten zweiten Gehäuse geführt ist und gegen eine entgegengesetzte Bewegungsrichtung durch Kippen in eine Klemm-Raststellung gebracht werden kann. Dieses Kippen in die Klemm-Raststellung kann durch eine Sicherungsfeder noch unterstützt werden.

Damit bei einer Höhenverstellung des Fahrzeugsitzes das Gurtschloß des Sicherheitsgurtes mitverstellt werden kann, genügt es, wenn das Ende des zweiten Gehäuses, aus welchem das Zugseil zum Sicherheitsgurt, insbesondere zum Hüftpunkt hin, geführt ist, bei der Höhenverstellung mitverschwenkt wird. Das andere Ende des zweiten Gehäuses kann dann verschiebbar am verstellbaren Fahrzeugsitz, insbesondere an der oberen verschiebbaren Ankerschiene, angelenkt sein.

In den Figuren sind Ausführungsbeispiele der Erfindung dargestellt. Anhand dieser Ausführungsbeispiele wird die Erfindung noch näher erläutert. Es zeigt:
- Fig. 1: in perspektivischer Explosivdarstellung die verschiedenen Bauteile bei einem ersten Ausführungsbeispiel der Erfindung;
- Fig. 2: das in der Fig. 1 dargestellte Ausführungsbeispiel in zusammengebautem Zustand in Seitenansicht;
- Fig. 2A: die Wirkungsweise des in den Figuren 1 und 2 dargestellten Ausführungsbeispiels;
- Fig. 3: in zusammengebautem Zustand ein erstes Gehäuse mit der Sensorik und der Druckfeder für ein zweites Ausführungsbeispiel der Erfindung;
- Fig. 3A: die Wirkungsweise des in Fig. 3 dargestellten Ausführungsbeispiels;
- Fig. 4: schematisch eine Detaildarstellung zur Erläuterung der Entriegelung der Druckfeder; und
- Fig. 5: eine schematische Darstellung zur Erläuterung der Höhenverstellbarkeit des zweiten Gehäuses, welches die Rücklaufsperre enthält.

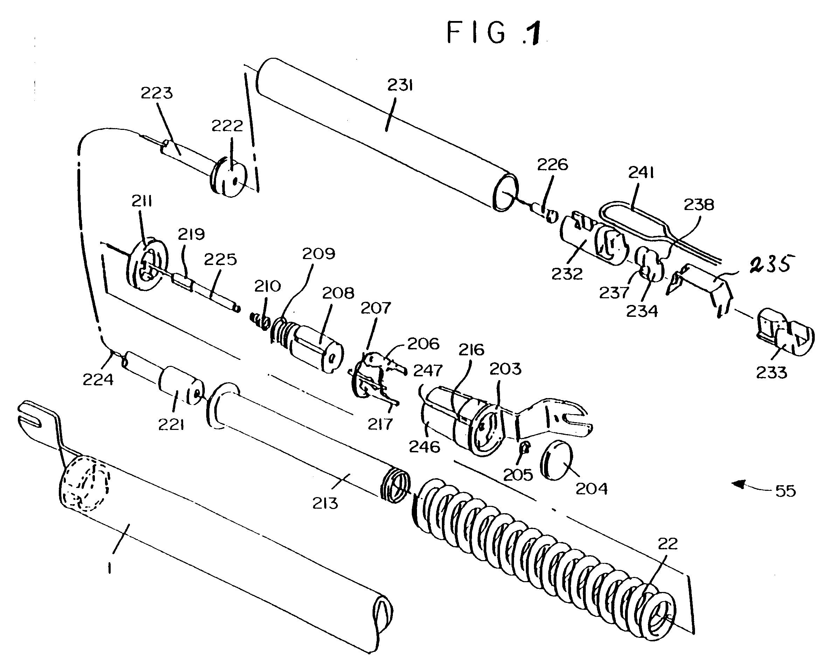

Die in den Figuren dargestellten Ausführungsbeispiele der Rückstrammervorrichtungen besitzen zwei, insbesondere rohrförmig ausgebildete Gehäuse 1 und 231. Im ersten Gehäuse 1 ist eine Druckfeder 22 angeordnet, die im gespannten Ruhezustand den Kraftspeicher für die die Gurtlose beseitigende Rückstrammbewegung bildet. Ferner ist im ersten Gehäuse 1 die Sensoreinrichtung angeordnet, welche im wesentlichen aus Sperrhebeln 206 (in Fig. 1 sind drei Sperrhebel 206 vorgesehen), einem Runddrahtring 207, mit welchem die Sperrhebel 206 an einem Riegelbolzen 208 in definierter verschwenkbarer Stellung gehalten werden, bestehen. Die Sperrhebel 206 liegen in verriegeltem Zustand der Druckfeder 22 jeweils mit Sensorhebeln 217 an Sensorflächen 216 an, die von schulterförmigen Vorsprüngen eines Abstützteils 203, das am Gehäuse befestigt ist, gebildet werden. Das erste Gehäuse 1 ist mit Hilfe eines Gehäusehalters 202 ortsfest am Fahrzeug, beispielsweise an einem Bodenteil des Fahrzeugs, befestigt.

Im ersten Gehäuse 1 ist die Druckfeder 22 an ihrem einen Ende über einen ringförmig ausgebildeten Federhalter 211, ein Verriegelungselement 214 und einen Riegeleingriffsteil 215 an einem Riegelbolzen 208 gegenüber dem Abstützteil 203, der am Gehäuse 1 befestigt ist, abgestützt. Das andere Ende der Druckfeder 22 ist an einem Abstützbund 239 eines Führungsrohres 213 abgestützt, das mit Hilfe eines Runddrahtringes 209 und in das Führungsrohr eingeformter Sicken am Riegelbolzen 208 befestigt ist. Die Verriegelung der Druckfeder 22 erfolgt in der Weise, daß die Druckfeder 22 über den Federhalter 211 auf das Verriegelungselement 214 am Sperrhebel 206 eine Druckkraft ausübt, durch welche das Verriegelungselement 214 in den Riegeleingriffsteil 215 am Riegelbolzen 208 gedrückt wird. Dabei liegt der Sensorarm 217 des Sperrhebels 206 auf der Sensorfläche 216 am Abstützteil 203 auf. Durch den Runddrahtring 207 werden die Sperrhebel 206 in einer definierten Position gegenüber dem Riegelbolzen 208 gehalten. Die Sperrriegel 206 sind dabei im Bereich der Außenfläche des Riegeleingriffes 215 schwenkbar um eine Schwenkachse 248 am Riegelbolzen 208 gelagert.

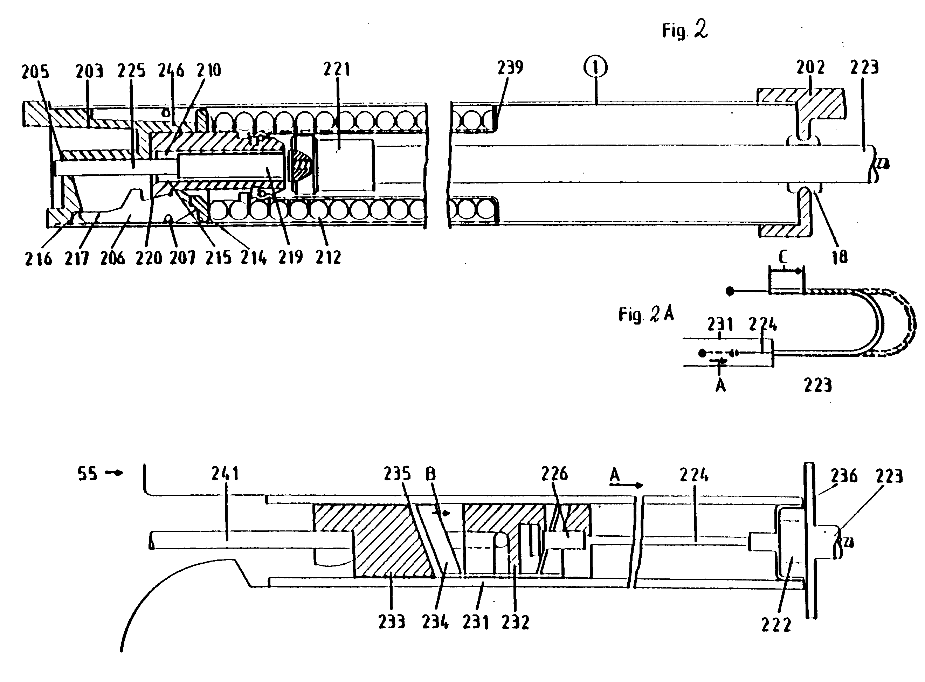

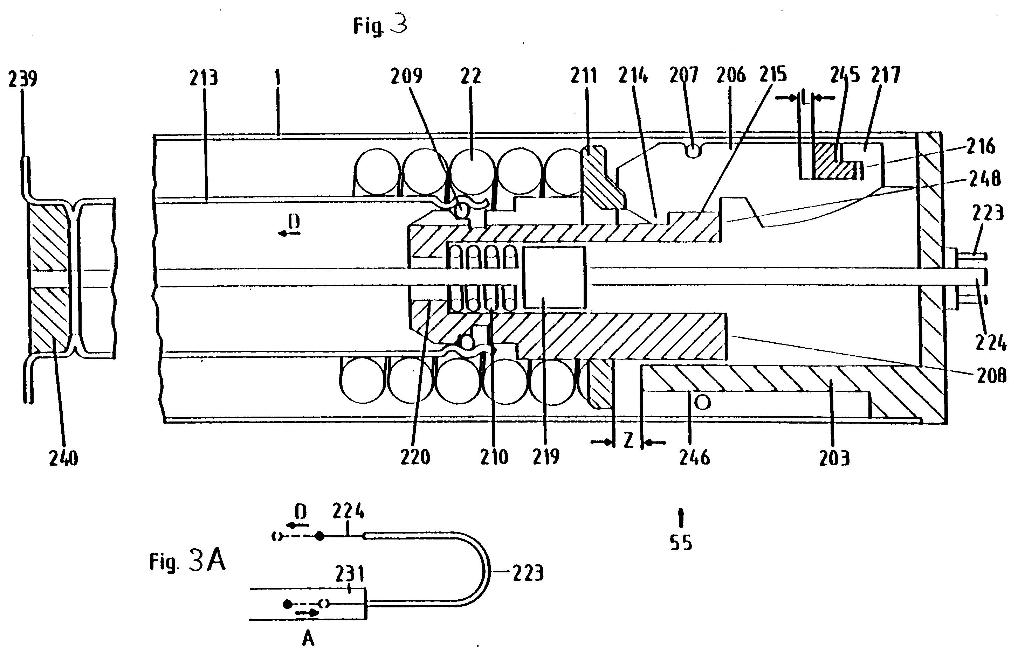

Bei dem in den Figuren 1 und 2 dargestellten Ausführungsbeispiel wird die Rückstrammbewegung, welche von der Druckfeder 22 vermittelt wird, über einen Bowdenzug, der aus einem Bowdenzugdraht 224 und einer den Bowdenzugdraht 224 umgebenden Bowdenzughülle 223 besteht, auf ein mit einem nicht näher dargestellten Sicherheitsgurt verbundenes Zugseil 241 übertragen. Das eine Ende des Zugdrahtes 224 ist am Gehäuse 1, insbesondere am Abstützteil 203, beispielsweise mit Hilfe eines Sicherungsringes 205, festgelegt. Durch einen Deckel 204 ist diese Verbindungsstelle nach außen abgedeckt. Der Sicherungsring 205 ist hierzu mit einem Abstützbolzen 225 verbunden, der ein Verbindungsstück 219 aufweist, mit welchem der Zugdraht 224 verpreßt ist. Der Abstützbolzen 225 und das verbreiterte Verbindungsstück 219 sind koaxial in einer Innenbohrung des Riegelbolzens 208 angeordnet. Das verbreiterte Verbindungsstück 219 besitzt eine Abstützschulter, an welcher die Sensorfeder 210 an ihrem einen Ende abgestützt ist. Das andere Ende der als Druckfeder ausgebildeten Sensorfeder 210 ist an einem nach innen ragenden Abstützkragen 220 am Riegelbolzen 208 abgestützt. Die Sensorfeder 210 ist bei dem Ausführungsbeispiel der Figuren 1 und 2 als Kegelfeder ausgebildet. Sie kann jedoch auch als Zylinderdruckfeder ausgebildet sein, wie dies beispielsweise in dem Ausführungsbeispiel der Fig. 3 gezeigt ist, wobei noch eine nicht näher dargestellte Abstützscheibe zwischen dem Verbindungsstück 219 und der Sensorfeder 210 vorgesehen sein kann.

Die Bowdenzughülle 223 ist über ein Abstützteil 221 gegenüber dem Riegelbolzen 208 abgestützt. Der Abstützteil 221 ist innerhalb des Führungsrohres 213 koaxial geführt. In bevorzugter Weise liegt hierbei die Bowdenzughülle 223 lose gegen den Riegelbolzen 208 an. Innerhalb des ersten Gehäuses 1 ist der Bowdenzug, d. h. der Zugdraht 224 und die ihn umgebende Hülle 223 koaxial geführt. In der Gehäusehalterung 202 ist der Bowdenzug mit Hilfe eines Klemmnippels 218 gehaltert.

Die Rücklaufsperre ist in dem zweiten rohrförmigen Gehäuse 231 angeordnet. Dieses rohrförmige Gehäuse 231 wirkt als Bremsrohr für die Rücklaufsperre. Die Rücklaufsperre enthält im wesentlichen eine Rastellipse 234, die mit der Rohrinnenseite in der gleichen Weise zusammenwirkt, wie das in der Hauptanmeldung beschrieben ist. Wie die Fig. 1 zeigt, besitzt die Rastellipse 234 des dargestellten Ausführungsbeispiels seitliche Ausnehmungen 237,238, in die das Zugseil 241 eingreift.

Im zweiten Gehäuse 231 ist ferner das andere Ende des Zugdrahtes 224 mit dem Zugseil 241 verbunden. Hierzu ist das Zugdrahtende mit einem Kegelnippel 226 verpreßt, der in einen als ein Verbindungsstück wirkenden Seilanker 232 eingesetzt ist. In diesen Seilanker 232 ist auch die Endschlaufe des Zugseils 241 eingelegt.

Die Endschlaufe des Zugseils 241 liegt ferner in den beiden Ausnehmungen 237 und 238 der Rastellipse 234 sowie in einem Seilführungsstück 233. Hierdurch wird eine einwandfreie axiale Führung des Zugseiles 241 und des Zugdrahtes 224 innerhalb des Gehäuses 231 erreicht.

Die Rastellipse 234 wird in Ruhestellung und in Rückstrammrichtung (Pfeil A) in der in Fig. 2 gezeigten definierten Schräglage klemmfrei geführt. Hierzu ist am Führungsteil 233 eine schräge Führungsfläche vorgesehen, durch welche die klemmfreie Schräglage der Rastellipse 234 definiert ist.

Zwischen der schrägen Führungsfläche am Seilführungsteil 203 und der Rastellipse 234 befindet sich ein Schenkel einer Sicherungsfeder 235. Diese Sicherungsfeder 235 ist etwa U-förmig ausgebildet und ist mit ihrem anderen Federschenkel im Seilanker 232 abgestützt.

Durch die Sicherungsfeder 235 wird nach Beendigung der Rückstrammbewegung die Rastellipse 234 in Richtung eines Pfeiles B verschwenkt, so daß die Rastellipse 234 in eine Klemm-Raststellung kippt. Dabei ist die Rastellipse 234 im Gehäuseinnern 231, das dann als Bremsrohr wirkt, verklemmt. Eine Bewegung des Zugseils 241 entgegen der Rückstrammrichtung A ist dann nicht mehr möglich. Die Gurtlose ist damit sicher aus dem Sicherheitsgurt entfernt.

Das andere Ende der Bowdenzughülle 223 ist am zweiten Gehäuse 231 mit Hilfe eines Abstützteils 222 am einen Ende des rohrförmigen Gehäuses 231 nicht verschiebbar abgestützt und festgelegt.

Wenn nach dem Lösen der Verriegelung, insbesondere des Verriegelungselements 214, aus der Verriegelungsposition die Druckfeder 22 sich aus der in Fig. 2 dargestellten Ruheposition ausdehnt, wird das Führungsrohr 213 in der Fig. 2 nach rechts bewegt. Bei dieser Bewegung wird auch der Riegelbolzen 208 nach rechts bewegt. In der Fig. 2A ist diese Bewegung durch den Pfeil C dargestellt. Bei dieser Bewegung wird die Bowdenzughülle 223 ebenfalls nach rechts bewegt, wobei gegebenenfalls der Klemmnippel 218 aus der Klemmposition herausgedrückt wird. Wie die Fig. 2A zeigt, erweitert sich die Schlaufe, mit welcher der Bowdenzug vom Gehäuse 1 zum Gehäuse 231 geführt ist. In der Fig. 2A ist die Schlaufenerweiterung strichliert dargestellt. Da das eine Ende des Bowdenzugdrahtes 224 am ortsfesten Gehäuse 1 festgelegt ist, überträgt sich die Erweiterung der Bowdenzugschleife auf das andere Ende des Zugdrahtes 224, das, wie oben beschrieben, mit dem Zugseil 241 verbunden ist. Hierdurch führt dieses Ende, und damit das Zugseil 241, die erforderliche Rückstrammbewegung in Richtung eines Pfeiles A in der Fig. 2A aus.

Das in der Fig. 3 dargestellte Ausführungsbeispiel weicht gegenüber dem in den Figuren 1 und 2 dargestellten Ausführungsbeispiel dahingehend ab, daß die von der Druckfeder 22 vermittelte Rückstrammbewegung direkt auf den Bowdenzugdraht 224 übertragen wird. Bei diesem Ausführungsbeispiel kann natürlich anstelle der Zwischenschaltung des Bowdenzugdrahtes 224 auch das Zugseil direkt mit der Rückstrammbewegung der entriegelten Druckfeder 22 beaufschlagt werden.

Die Anordnung im zweiten Gehäuse 231, d. h. die Rücklaufsperrenanordnung, ist die gleiche wie beim Ausführungsbeispiel der Figuren 1 und 2.

Bei dem in der Fig. 3 dargestellten Ausführungsbeispiel ist der Zugdraht 224 des Bowdenzugs an seinem Ende mit dem Führungsrohr 213 verbunden. Hierzu kann der Zugdraht 224 direkt bei der Zugdrahtbefestigung 240 am Führungsrohr 213 befestigt sein, oder es kann in der Zugdrahtbefestigung 240 ein Stift befestigt sein und dieser Stift mit dem Zugdraht 224 durch ein Verbindungsstück 219 verbunden sein. Das Verbindungsstück 219 ist, wie beim Ausführungsbeispiel der Figuren 1 und 2, in einer Innenbohrung des Verriegelungsbolzens 208 axial geführt. Zwischen dem gegenüber dem Zugdraht 224 verbreitert ausgebildeten Verbindungsstück 219 und dem Abstützkragen 220 am Verriegelungsbolzen 208 ist die Sensorfeder 210,welche als Druckfeder ausgebildet ist, eingesetzt. Bei diesem Ausführungsbeispiel ist die Sensorfeder 210 als zylindrische Feder ausgebildet. Sie kann jedoch in der gleichen Weise wie beim Ausführungsbeispiel der Figuren 1 und 2 als Kegelfeder ausgebildet sein.

Nach dem Lösen der Verriegelung für die Druckfeder 22 dehnt sich die Druckfeder 22 aus und veranlaßt eine Rückstrammbewegung in Richtung eines Pfeiles D. In diese Richtung wird der Zugdraht 224 innerhalb der Bowdenzughülle 223 bewegt. In der Fig. 3A ist diese Bewegung ebenfalls dargestellt. Das am Führungsrohr 213 festgelegte Ende des Zugdrahtes 224 wird in diese Richtung bewegt. Diese Rückstrammbewegung überträgt sich auch auf das andere Ende des Zugdrahtes 224, das im zweiten Gehäuse 231 mit dem Zugseil in der gleichen Weise verbunden ist wie beim Ausführungsbeispiel der Figuren 1 und 2. Auf das Zugseil wird daher in Pfeilrichtung A die erforderliche Rückstrammbewegung übertragen, welche die Gurtlose aus dem Sicherheitsgurt beseitigt.

Das Lösen der Verriegelung, mit welcher die Druckfeder 22 am Riegelbolzen verriegelt ist, erfolgt im wesentlichen in der gleichen Weise, wie oben schon beschrieben wurde.

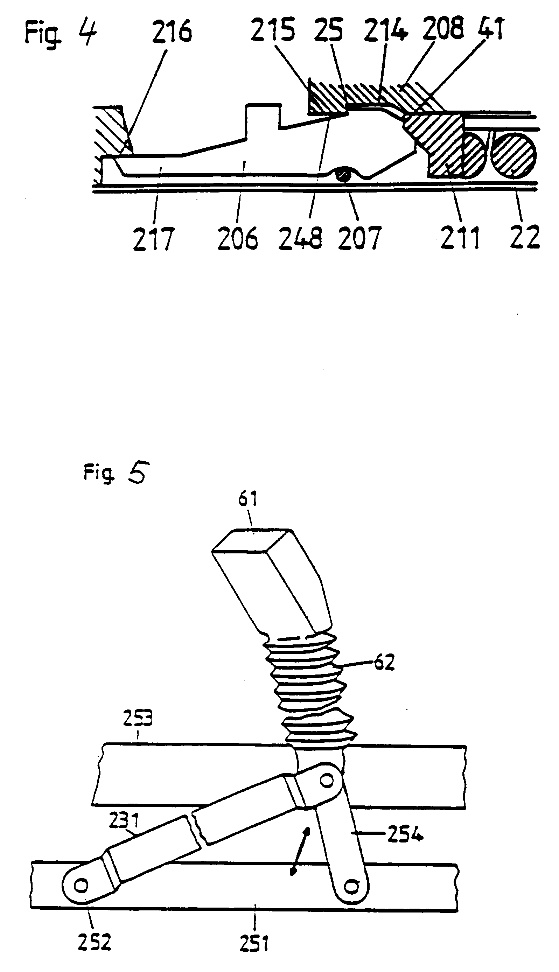

Bei dem in der Fig. 3 dargestellten Ausführungsbeispiel wird für die Verriegelung der Druckfeder 22 in der gleichen Weise wie beim Ausführungsbeispiel der Figuren 1 und 2 das Verriegelungselement 214 zwischen den ringförmigen Federhalter 211 und den Riegeleingriffsteil 215 am Riegelbolzen 208 gedrückt. Das Verriegelungselement ist am Sperrhebel 206 einstückig vorgesehen (auch bei der Ausführungsform in der Fig. 4, welche eine vergrößerte Darstellung für das Ausführungsbeispiel der Figuren 1 und 2 darstellt). Während bei der Ausführungsform der Fig. 4 der ebenfalls am Sperrhebel 206 vorgesehene Sensorarm 217 an der Sensorfläche 216 anliegt, die an den Abstützteil 203 angeformt ist, ist bei der Ausführungsform der Fig. 3 am Gehäuse 1 ortsfest ein Eingriffsteil 245 vorgesehen, der an der Innenwand des Gehäuses 1 befestigt ist. Dieser Eingriffsteil 245 besitzt die Sensorfläche 216, an welcher der Sensorhebel 217 mit einer Sensorfläche in Eingriff liegt. Zwischen dem Eingriffsteil 245 und dem Sperrhebel 206 ist ein Abstand L vorhanden, der es ermöglicht, daß der Sensorhebel 217 mit der Sensorfläche 216 am Eingriffsteil im Crashfall außer Eingriff kommt. Hierzu ist ein weiterer Abstand Z zwischen dem ringförmigen Federhalter 3 und dem Abstützteil 203 vorgesehen. Wie die Figuren 1 bis 9 ferner zeigen, ist der Riegelbolzen 208 in einer Führungshülse 246, welche an den Abstützteil 203 angeformt ist, in axialer Richtung geführt. Diese Führungshülse 246 besitzt Führungsschlitze 247, in welchen die Sperrhebel 206 liegen.

Bei übermäßiger Geschwindigkeitsänderung, insbesondere im Crashfall, bewegt sich die als Trägheitsmasse wirkende Druckfeder 22 in den Figuren 1 und 3 nach rechts. Hierdurch kommen die Sensorflächen 216 mit den Sensorhebeln 217 außer Eingriff und aufgrund der Druckkraft, welche die Druckfeder 22 auf das Sperrelement 214 an den Sperrhebeln 206 ausübt, werden die Sperrelemente 214 aus ihrer Verriegelungsposition um eine Schwenkachse 248, welche im Abstützbereich der Sperrhebel 206 am Riegelbolzen 208 liegt, so geschwenkt, daß sie außer Eingriff mit dem Eingriffsteil 215 am Riegelbolzen 208 kommen. Hierdurch ist die Verriegelung der Druckfeder 22 freigegeben, und diese kann sich, wie schon erläutert, ausdehnen und die Rückstrammbewegung für die Beseitigung der Gurtlose erzeugen. Beim Ausführungsbeispiel der Fig. 3 stützt sich die Druckfeder 22 über den Federhalter 211 dann am Abstützteil 203 ab.

Gemäß der in der Fig. 5 dargestellten Ausführungsform kann eine Höhenverstellung des Sitzes, von dem ein Sitzteil 253 schematisch in Fig. 5 dargestellt ist, vom zweiten Gehäuse 231, welches die Rücklaufsperre enthält, mitausgeführt werden. Hierzu kann wenigstens der Endteil des Gehäuses 231, aus welchem das Zugseil z.B. über eine Umlenkeinrichtung und einen Rückstrammerschacht 62 zu einem Gurtschloß 61 geführt ist, die Höhenverstellung des Fahrzeugsitzes 253 mitvollführen. Hierzu ist das entsprechende Ende des Gehäuses 231 an einem Anlenkhebel 254 schwenkbar befestigt, wobei der Anlenkhebel 254 an der verstellbaren Sitzschiene 251 schwenkbar befestigt ist. Das andere Ende des zweiten Gehäuses 231 ist mittels einer Halterung 252 verschiebbar an der verstellbaren Sitzschiene 251 angelenkt.

## Patentansprüche

1. Vorrichtung zum Straffen eines Sicherheitsgurtes in einem Fahrzeug, insbesondere Kraftfahrzeug, mit einem Sensor (206), der auf eine extreme Fahrzeuggeschwindigkeitsänderung anspricht, einer in einem Gehäuse (1) angeordneten Druckfeder (22), die durch eine Verriegelung einen in einem gespannten Zustand gehaltenen Kraftspeicher für eine, eine Gurtlose beseitigende Rückstrammbewegung bildet, mit einem mit dem Sicherheitsgurt verbundenen Zugseil (241), auf welches im entriegelten Zustand des Kraftspeichers (22) die Rückstrammbewegung übertragen wird, und einer Rücklaufsperre (234), die in einer zur Rückstrammbewegung entgegengesetzten Bewegungsrichtung des Zugseils sperrend wirkt,
dadurch **gekennzeichnet,**
daß der Sensor (206) und die den Kraftspeicher bildende Druckfeder (22) in einem am Fahrzeug ortsfest befestigten ersten Gehäuse (1) angeordnet sind, und die Rücklaufsperre (234) in einem zweiten, mit einem Fahrersitz mitverstellbaren zweiten Gehäuse (231) angeordnet ist und
daß ein Bowdenzug (223, 224) als Übertragungsmittel für die von der entriegelten Druckfeder (22) verursachte Rückstrammbewegung auf die mit dem Zugseil (241) verbundene Rücklaufsperre (234) vorgesehen ist.

2. Vorrichtung nach Anspruch 1, dadurch gekennzeichnet, daß der Bowdenzugdraht (224) an seinem einen Ende am ersten Gehäuse (1) befestigt ist und mit seinem anderen Ende mit dem Zugseil (241) verbunden ist, und daß die Bowdenzughülle (223) mit ihrem einen Ende mit einem durch die entriegelte Druckfeder (22) bewegten Bauteil (208, 213) zur Mitbewegung verbunden ist und das andere Ende der Bowdenzughülle (223) am zweiten Gehäuse (231) ortsfest befestigt ist.

3. Vorrichtung nach Anspruch 1, dadurch gekennzeichnet, daß der Bowdenzugdraht (224) an seinem einen Ende mit einem durch die entriegelte Druckfeder (22) bewegten Bauteil zur Mitbewegung verbunden ist und das andere Ende des Bowdenzugdrahtes (224) mit dem Zugseil (241) verbunden ist.

4. Vorrichtung nach Anspruch 1 oder 2, dadurch gekennzeichnet, daß die Bowdenzughülle (223) am ersten Gehäuse (1) in Richtung der von der Druckfeder (22) vermittelten Rückstrammbewegung beweglich geführt ist, und durch die Bewegung der Bowdenzughülle (223) gegenüber dem ersten Gehäuse (1) auf das mit dem Zugseil (241) verbundene Ende des Bowdenzugdrahtes (224) die Rückstrammbewegung für den Sicherheitsgurt übertragen ist.

5. Vorrichtung nach einem der Ansprüche 1 bis 5, dadurch gekennzeichnet, daß das erste und zweite Gehäuse (1, 231) rohrförmig ausgebildet sind, und die Rückstrammbewegung in axialen Richtungen der beiden rohrförmigen Gehäuse (1, 231) erfolgt.

6. Vorrichtung nach einem der Ansprüche 1 bis 5, dadurch gekennzeichnet, daß das zweite Gehäuse (231) als Bremsrohr für eine mit dem Zugseil (241) verbundene Rastellipse (234) ausgebildet ist, die in Ruhestellung und Rückstrammrichtung in definierter Schräglage klemmfrei im rohrförmigen zweiten Gehäuse (231) geführt ist, und gegen eine entgegengesetzte Bewegungsrichtung durch Kippen in eine Klemm-Raststellung bringbar ist.

7. Vorrichtung nach einem der Ansprüche 1 bis 6, dadurch gekennzeichnet, daß der Bowdenzugdraht (224) mittels eines im zweiten Gehäuse (231) axial geführten Seilverbindungsstücks (232) mit dem Zugseil (41) verbunden ist.

8. Vorrichtung nach einem der Ansprüche 1 bis 7, dadurch gekennzeichnet, daß zumindest das eine Ende des zweiten Gehäuses (231), aus welchem das Zugseil (241) zum Sicherheitsgurt hin geführt ist, mit dem Fahrzeugsitz (253) höhenverstellbar ist.

## Claims

1. A device for tensioning a safety belt in a vehicle, in particular a motor vehicle, having a sensor (206) which responds to an extreme change in vehicle speed, a compression spring (22) which is arranged in a housing (1) and which by virtue of a locking action forms a force storage means which is held in a stressed condition, for a tightening movement for eliminating belt slack, a tension cable (241) which is connected to the safety belt and to which the tightening movement is transmitted in the unlocked condition of the force storage means (22), and a return motion blocking means (234) which has a blocking action in a direction of movement of the tension cable which is opposite to the tightening movement, characterised in that the sensor (206) and the compression spring (22) which forms the force storage means are arranged in a first housing (1) which is stationarily fixed to the vehicle and the return motion blocking means (234) is arranged in a second housing (231) which is adjustable jointly with a vehicle seat, and that a Bowden cable assembly (223, 224) is provided as the transmission means for transmission of the tightening movement caused by the unlocked compression spring (22) to the return motion blocking means (234) which is connected to the tension cable (241).

2. A device according to claim 1 characterised in that at its one end the Bowden cable assembly wire (224) is fixed to the first housing (1) and is connected by its other end to the tension cable (241), and that the Bowden cable assembly sheath (223) is connected by its one end to a component (208, 213) moved by the unlocked compression spring (22), for movement therewith, and the other end of the Bowden cable assembly sheath (223) is stationarily fixed to the second housing (231).

3. A device according to claim 1 characterised in that at its one end the Bowden cable assembly wire (224) is connected to a component which is moved by the unlocked compression spring (22), for movement therewith, and the other end of the Bowden cable assembly wire (224) is connected to the tension cable (241).

4. A device according to claim 1 or claim 2 characterised in that the Bowden cable assembly sheath (223) is guided at the first housing (1) movably in the direction of the tightening movement imparted by the compression spring (22) and the tightening movement for the safety belt is transmitted to the end of the Bowden cable assembly wire (224) which is connected to the tension cable (241), by the movement of the Bowden cable assembly sheath (223) relative to the first housing (1).

5. A device according to one of claims 1 to 5 characterised in that the first and second housings (1, 231) are of a tubular configuration and the tightening movement takes place in dial directions of the two tubular housings (1, 231).

6. A device according to one of claims 1 to 5 characterised in that the second housing (231) is in the form of a braking tube for an elliptical arresting member (234) which is connected to the tension cable (241) and which is guided in the rest position and in the tightening direction in a defined inclined position in a clamping-free condition in the tubular second housing (231) and can be put by tilting into a clamping arresting position to prevent movement in an opposite direction.

7. A device according to one of claims 1 to 6 characterised in that the Bowden cable assembly wire (224) is connected to the tension cable (41) by means of a cable connecting portion (232) which is axially guided in the second housing (231).

8. A device according to one of claims 1 to 7 characterised in that at least the one end of the second housing (231), out of which the tension cable (241) is passed to the safety belt, is adjustable in height with the vehicle seat (253).

## Revendications

1. Dispositif pour tendre une ceinture de sécurité dans un véhicule, un véhicule automobile notamment, avec un détecteur (206), qui répond à une variation de vitesse extrême du véhicule, avec un ressort de pression (22), disposé dans un boîtier (1) et qui forme, par un verrouillage, un accumulateur de force maintenu dans un état de tension pour un mouvement de blocage en retour, supprimant un jeu de la ceinture, avec un câble de traction (241), relié à la ceinture de sécurité et auquel est transmis le mouvement de blocage en retour à l'état de déverrouillage de l'accumulateur de force (22), et avec un enclenchement au retour (234), qui exerce un effet de blocage dans un sens de mouvement du câble de traction, opposé au mouvement de blocage en retour, caractérisé en ce que le détecteur (206) et le ressort de pression (22), formant l'accumulateur de force, sont disposés dans un premier boîtier (1) fixé d'une manière stationnaire sur le véhicule, l'enclenchement au retour (234) étant disposé dans un second boîtier (231), mobile avec un siège de conducteur, et en ce qu'un câble Bowden (223, 224) est prévu comme moyen de transmission du mouvement de blocage en retour, provoqué par le ressort de pression (22) déverrouillé, à l'enclenchement au retour relié au câble de traction (241).

2. Dispositif suivant la revendication 1, caractérisé en ce que le fil du câble Bowden (224) est fixé sur l'une de ses extrémités sur le premier boîtier (1), et est relié par son autre extrémité au câble de traction (241), et en ce que la gaine du câble Bowden (223) est reliée par l'une de ses extrémités à un composant (208, 213), déplacé par le ressort de pression (22) déverrouillé, pour un mouvement concomitant, l'autre extrémité de la gaine du câble Bowden (223) étant fixée d'une manière stationnaire sur le second boîtier (231).

3. Dispositif suivant la revendication 1, caractérisé en ce que le fil du câble Bowden (224) est relié sur l'une de ses extrémités à un composant, déplacé par le ressort de pression (22) déverrouillé, pour un mouvement concomitant, l'autre extrémité du fil du câble Bowden (224) étant reliée au câble de traction (241).

4. Dispositif suivant l'une des revendications 1 ou 2, caractérisé en ce que la gaine du câble Bowden (223) est guidée d'une manière mobile sur le premier boîtier (1), dans le sens du mouvement de blocage en retour provoqué par le ressort de pression (22), le mouvement de blocage en retour pour la ceinture de sécurité étant transmis à l'extrémité du fil du câble Bowden (224), reliée au câble de traction (241), par le mouvement de la gaine du câble Bowden (223) par rapport au premier boîtier (1).

5. Dispositif suivant l'une quelconque des revendications 1 à 5, caractérisé en ce que le premier et le second boîtiers (1, 231) sont réalisés en forme de tube, le mouvement de blocage en retour étant assuré dans les deux sens axiaux des deux boîtiers tubulaires (1, 231).

6. Dispositif suivant l'une quelconque des revendications 1 à 5, caractérisé en ce que le second boîtier (231) est réalisé sous forme de tube-frein pour une ellipse d'arrêt (234), reliée au câble de traction (241), cette ellipse étant guidée sans blocage, en position de repos et dans le sens du blocage en retour, dans une position oblique définie dans le second boîtier tubulaire (231), et pouvant être amenée par basculement dans une position d'arrêt et de blocage contre un sens de mouvement opposé.

7. Dispositif suivant l'une quelconque des revendications 1 à 6, caractérisé en ce que le fil du câble Bowden (224) est relié au câble de traction (241) au moyen d'une pièce de jonction (232), guidée dans le sens axial dans le second boîtier (231).

8. Dispositif suivant l'une quelconque des revendications 1 à 7, caractérisé en ce que l'une des extrémités, du moins, du second boîtier (231), à partir de laquelle le câble de traction (241) est guidé en direction de la ceinture de sécurité, est réglable en hauteur avec le siège du véhicule (253).
